# EUROPEAN PATENT APPLICATION

(11) **EP 4 648 156 A1**
(43) Date of publication of application: **12.11.2025**
(21) Application number: 23938228.6
(22) Date of filing: 16.11.2023
(51) Int. Cl.: H01M 10/0525, H01M 10/42, H01M 4/13

(54) **ANODE PIECE, BATTERY, AND ELECTRIC APPARATUS**

(30) Priority: 24.05.2023 CN 202310594306
(71) Applicant: Contemporary Amperex Technology Co., Limited, Ningde, Fujian 352100 (CN)
(72) Inventor: WU, Longsheng, Ningde, Fujian 352100 (CN); CHEN, Xingbu, Ningde, Fujian 352100 (CN); WU, Lili, Ningde, Fujian 352100 (CN); LI, Xuan, Ningde, Fujian 352100 (CN); LIU, Rundie, Ningde, Fujian 352100 (CN); DONG, Miaomiao, Ningde, Fujian 352100 (CN)
(74) Representative: Ziebig Hengelhaupt Intellectual Property Attorneys Patentanwaltskanzlei PartGmbB
(86) International application number: PCT/CN2023/132068
(87) International publication number: WO 2024/239561

(57) **Abstract**

The present application provides a negative electrode plate, a battery, and an electrical apparatus. The negative electrode plate comprises a negative electrode current collector and a negative electrode film layer located on at least one surface of the negative electrode current collector. The negative electrode film layer comprises a base coating and a negative electrode active layer. The base coating is located between the negative electrode current collector and the negative electrode active layer. The base coating comprises a conductive agent and a first binder. The negative electrode active layer comprises a silicon-based material. The tensile strength of the negative electrode current collector is ≥ 800 MPa, and the peel strength of the negative electrode film layer is ≥ 28 N/m. The fitting between the current collector and the active layer can reduce the risk of the electrode plate wrinkling during charging, and the base coating can increase the bonding force between the negative electrode film layer and the negative electrode current collector while maintaining the conductivity, thereby reducing the risk of detachment of the negative electrode film layer from the electrode plate.

## Description

### CROSS-REFERENCE TO RELATED APPLICATIONS

The present application claims priority to Chinese Patent Application No. 2023105943063, filed on May 24, 2023, entitled "NEGATIVE ELECTRODE PLATE, BATTERY, AND ELECTRICAL APPARATUS", which is incorporated herein by reference in its entirety.

### TECHNICAL FIELD

The present application relates to the technical field of batteries and in particular to a negative electrode plate, a battery, and an electrical apparatus.

### BACKGROUND

The statement herein only provides background information related to the present application and does not necessarily constitute the prior art.

Silicon-based materials have relatively high gram capacities, and using these silicon-based materials as active materials in batteries can increase the energy density of the batteries. However, silicon-based materials generally have a relatively large expansion rate. In addition, during the charging process of a battery, the expansion of the silicon-based material may cause the problems of wrinkling of an electrode plate and detachment of an active layer, which adversely affects the cycling performance of the battery.

### SUMMARY OF THE INVENTION

The present application provides a negative electrode plate. The negative electrode plate comprises a negative electrode current collector and a negative electrode film layer located on the negative electrode current collector. The negative electrode film layer comprises a base coating and a negative electrode active layer; the base coating is located between the negative electrode current collector and the negative electrode active layer; the base coating comprises a conductive agent and a first binder; an active material of the negative electrode active layer comprises a silicon-based material; the tensile strength of the negative electrode current collector is ≥ 800 MPa; and the peel strength of the negative electrode film layer is ≥ 30N/m.

In the above negative electrode plate, the fitting between the negative electrode current collector with a relatively great tensile strength and the active layer comprising the silicon-based material can reduce the risk of wrinkling of the electrode plate during charging; in addition, the base coating comprising the conductive agent and the first binder can improve the bonding force between the negative electrode film layer and the negative electrode current collector while maintaining conductivity, thereby reducing the risk of detachment of the negative electrode film layer from the electrode plate, so that the cycling performance of the battery can be improved.

In some embodiments, the Young's modulus of the negative electrode current collector is ≥ 80 GPa. Enabling the Young's modulus of the negative electrode current collector to be within this range can make the negative electrode current collector have a relatively low elongation under stress and can result in a certain restraining effect on the elongation of the negative electrode plate during the charging and discharging process, thereby further reducing the risk of wrinkling of the negative electrode plate.

In some embodiments, the base coating further comprises graphite. Adding graphite to the base coating can not only prevent the silicon-based active material from pressure-induced damage to the current collector during the compaction of the electrode plate, but can also result in co-action with the conductive agent in the base coating to form a better conductive network.

In some embodiments, the graphite includes lamellar graphite. Lamellar graphite has certain slip properties, which can reduce the elongation of the silicon-based material during expansion, release the stress generated during the expansion of the active material, and further reduce the risk of detachment and wrinkling of the electrode plate film layer.

In some embodiments, the mass percentage of the graphite in the base coating is 20-35%. If the mass percentage of graphite in the base coating is too low, ti will be challenging to achieve a good effect, and if the mass percentage of graphite in the base coating is too large, a certain adverse effect on the binding performance of the base coating may occur.

In some embodiments, the thickness of the base coating is 2-6 µm. If the base coating is too thick, the overall thickness and volume of the negative electrode plate may be increased and the thickness of the active layer may also accordingly be reduced, thereby reducing the amount of the active material, leading to reduced energy density of the battery.

In some embodiments, the mass percentage of the first binder in the base coating is 25-40%. When the mass percentage of the first binder in the base coating is within this range, the base coating can be provided with suitable binding properties, thus improving the peel strength of the negative electrode film layer.

In some embodiments, the glass transition temperature of the first binder is 10-50°C. If the glass transition temperature of the first binder is too low, the electrode may stick to a roller during subsequent processing, which results in an adverse effect on the subsequent processing of the electrode plate. If the glass transition temperature of the first binder is too high, the electrode plate may become relatively highly brittle and relatively poorly flexible, causing problems such as powder falling and film detachment during subsequent processing, which may also result in an adverse effect on the subsequent processing of the electrode plate.

In some embodiments, the mass percentage of the conductive agent in the base coating is 30-50%.

In some embodiments, the conductive agent comprises at least one of superconducting carbon, acetylene black, carbon black, Ketjen black, carbon dots, carbon nanotubes, graphene, and carbon nanofibers.

In some embodiments, the mass percentage of the silicon-based material in the active material of the negative electrode active layer is ≥ 50%.

In some embodiments, the silicon-based material comprises at least one of a silicon-oxygen material and a silicon-carbon material.

In some embodiments, the negative electrode active layer further comprises a second binder.

In some embodiments, the Dv50 of the second binder is 100-600 nm.

In some embodiments, the glass transition temperature of the second binder is 10-50°C. If the glass transition temperature of the second binder is too low, the electrode may stick to a roller during subsequent processing, which results in an adverse effect on the subsequent processing of the electrode plate. If the glass transition temperature of the second binder is too high, the electrode plate may become relatively highly brittle and relatively poorly flexible, causing problems such as powder falling and film detachment during subsequent processing, which may also result in an adverse effect on the subsequent processing of the electrode plate.

In some embodiments, the compacted density of the negative electrode active layer is 1.1-1.8 g/cm³. If the compacted density of the negative electrode active layer is too small, the energy density of the battery may be reduced. If the compacted density is too large, the negative electrode active layer may suffer from particle pulverization, thus deteriorating the cycling performance.

In some embodiments, the compacted density of the negative electrode active layer is 1.15-1.65 g/cm³.

In some embodiments, the material of the negative electrode current collector comprises at least one of a copper alloy, stainless steel, and an iron-nickel alloy.

In some embodiments, the thickness of the negative electrode current collector is 4-20 µm.

In some embodiments, the thickness of the negative electrode current collector is 5-10 µm.

In some embodiments, the elongation at break of the negative electrode current collector is ≤ 4%.

A battery comprising the negative electrode plate is provided.

An electrical apparatus comprising the battery is provided.

### DESCRIPTION OF THE DRAWINGS

In order to provide a clearer explanation of the technical solution of the present application, a brief introduction will be given to the accompanying drawings used in the present application. It is evident that the accompanying drawings described below are only some embodiments of the present application. For those of ordinary skill in the art, other accompanying drawings can also be obtained based on the drawings without any creative effort.
FIG. 1 is a schematic view of a secondary battery according to an embodiment of the present application.
FIG. 2 is an exploded view of a secondary battery according to an embodiment of the present application as shown in FIG. 1.
FIG. 3 is a schematic view of an electrical apparatus in which a secondary battery serves as a power source according to an embodiment of the present application.

### Description of reference numerals:

1. Secondary battery; 11. case; 12. electrode assembly; 13. top cover assembly; and 2. electrical apparatus.

To better describe and illustrate embodiments and/or examples of the present invention disclosed herein, reference may be made to one or more accompanying drawings. Additional details or examples used to describe the accompanying drawings are not to be considered as limiting the scope of any of the disclosed invention, the currently described embodiments and/or examples, and the best modes of the present invention currently understood.

### DETAILED DESCRIPTION

For ease of understanding of the present application, the present application will be described below more completely with reference to the accompanying drawings. The accompanying drawings provide preferred embodiments of the present application. However, the present application can be implemented in various forms and is not limited to the embodiments described herein. On the contrary, these embodiments are provided for the purpose of more thoroughly and completely understanding the content disclosed by the present application.

Unless otherwise defined, all technical and scientific terms used herein have the same meanings as commonly understood by those skilled in the field to which the present application belongs. Herein, the terms used in the specification of the present application are only for the purpose of describing specific embodiments and is not intended to limit the present application. The term "and/or" used herein includes any and all combinations of one or more relevant items listed.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be carried out, either in order or randomly, preferably in order in some embodiments. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. By way of example, the phrase "A or B" indicates "A, B, or both A and B". More specifically, any one of the following conditions satisfies the condition "A or B": A is true or present and B is false or absent; A is false or absent and B is true or present; or both A and B are true or both A and B are present.

Unless otherwise specified, the terms used in the present application have well-known meanings as commonly understood by those skilled in the art. Unless otherwise specified, the numerical values of various parameters mentioned in the present application can be measured by using various measurement methods as commonly used in the art. For example, the test can be carried out following the method in the embodiments of the present application.

Another embodiment of the present application provides a negative electrode plate. The negative electrode plate comprises a negative electrode current collector and a negative electrode film layer located on the negative electrode current collector. The negative electrode film layer comprises a base coating and a negative electrode active layer. The base coating is located between the negative electrode current collector and the negative electrode active layer. The base coating comprises a conductive agent and a first binder.The active material of the negative electrode active layer comprises a silicon-based material. The tensile strength of the negative electrode current collector is ≥ 800 Megapascal (MPa), and the peel strength of the negative electrode film layer is ≥ 28 Newton/meter (N/m).

In the negative electrode plate of the above embodiment, the fitting between the negative electrode current collector with a greater tensile strength and the active layer comprising the silicon-based material can reduce the risk of wrinkling of the electrode plate during charging. In addition, the base coating comprising the conductive agent and the first binder can improve the bonding force between the negative electrode film layer and the negative electrode current collector while maintaining conductivity, thereby reducing the risk of detachment of the negative electrode film layer from the electrode plate.

It can be understood that the negative electrode film layer is located on at least one surface of the negative electrode current collector.

It can also be understood that the base coating is located between the negative electrode current collector and the negative electrode active layer, and the negative electrode current collector and the negative electrode active layer can be connected via the base coating. Thus, by means of the action of connection of the base coating to the negative electrode current collector and the negative electrode active layer, a certain buffering effect on the expansion of the silicon-based material can be achieved, thereby further reducing the risk of wrinkling of the electrode plate.

Optionally, the tensile strength of the negative electrode current collector is ≥ 800 MPa, or the tensile strength of the negative electrode current collector is ≥ 850 MPa, or the tensile strength of the negative electrode current collector is ≥ 900 MPa, or the tensile strength of the negative electrode current collector is ≥ 950 MPa, or the tensile strength of the negative electrode current collector is ≥ 1000 MPa.

Optionally, the peel strength of the negative electrode film layer is ≥ 28 N/m, or the peel strength of the negative electrode film layer is ≥ 30 N/m, or the peel strength of the negative electrode film layer is ≥ 32 N/m, or the peel strength of the negative electrode film layer is ≥ 35 N/m, or the peel strength of the negative electrode film layer is ≥ 38 N/m, or the peel strength of the negative electrode film layer is ≥ 40 N/m, or the peel strength of the negative electrode film layer is ≥ 45 N/m, or the peel strength of the negative electrode film layer is ≥ 50 N/m.

In the present application, the tensile strength can be tested by cutting a negative electrode current collector sample with a length of 100 millimeters (mm) and a width of 15 mm with a precision of 0.05 mm, clamping the sample between upper and lower clamps of a tensile testing machine, with the distance between the upper and lower clamps being 50 mm, actuating the clamps and maintaining the clamps at 5 millimeters/minute (mm/min), applying load at a stable speed, and recording the maximum load at which the sample fails under shear.

In the present application, the peel strength of the negative electrode film layer can be tested by attaching a 20 mm wide standard adhesive tape (31B) to one surface of the negative electrode film layer using a rolling machine with a fixed stress (2 kilograms (kg), 300 mm/min), performing a 180 degree peel test using a tensile testing machine at a speed of 300 mm/min, obtaining the peel force values of 50 points at a test distance of 50 mm to 120 mm, and calculating the average value. The peel strength is used to indicate the degree of bonding between the negative electrode film layer and the negative electrode current collector. The greater the peel strength, the better the bonding between the negative electrode film layer and the negative electrode current collector.

In some embodiments, the Young's modulus of the negative electrode current collector is ≥ 80 gigapascals (GPa). Enabling the Young's modulus of the negative electrode current collector to be within this range can make the negative electrode current collector have a relatively low elongation under stress and can result in a certain restraining effect on the elongation of the negative electrode plate during the charging and discharging process, thereby further reducing the risk of wrinkling of the negative electrode plate. Optionally, the Young's modulus of the negative electrode current collector is ≥ 83 GPa, or the Young's modulus of the negative electrode current collector is ≥ 85 GPa, or the Young's modulus of the negative electrode current collector is ≥ 90 GPa.

In the present application, the Young's modulus of the negative electrode current collector can be measured by a static method in accordance with the national standard "Metallic materials - Determination of modulus of elasticity and Poisson's ratio" (GB/T 22315-2008).

As some selected examples of the negative electrode current collector, the material of the negative electrode current collector comprises at least one of a copper alloy, stainless steel, and an iron-nickel alloy.

In some embodiments, the thickness of the negative electrode current collector is 4-20 microns (µm). If the thickness of the negative electrode current collector is too small, the structural stability of the negative electrode plate may be relatively low. If the thickness of the negative electrode current collector is too large, the volume of the negative electrode plate may be too large, which may correspondingly reduce the amount of the active substance and reduce the energy density of the battery. Optionally, the thickness of the negative electrode current collector is 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm. Further optionally, the thickness of the negative electrode current collector is 5-10 µm.

In some embodiments, the elongation at break of the negative electrode current collector is ≤ 4%. For example, the elongation at break of the negative electrode current collector is 4%, 3.8%, 3.5%, 3.2%, 3%, etc.

In some embodiments, the base coating further comprises graphite. It can be understood that the graphite can include at least one of natural graphite and artificial graphite. Adding graphite to the base coating can not only prevent the silicon-based active material from pressure-induced damage to the current collector during the compaction of the electrode plate, but can also result in co-action with the conductive agent in the base coating to form a better conductive network.

Optionally, the graphite includes lamellar graphite. Lamellar graphite has certain slip properties, which can reduce the elongation of the silicon-based material during expansion, release the stress generated during the expansion of the active material, and further reduce the risk of detachment and wrinkling of the electrode plate film layer. Further optionally, the graphite includes at least one of KS-based graphite and SFG-based graphite. Still further optionally, the graphite includes KS-6, KS-10, KS-16, SFG-6, SFG-10, and SFG-15. It can be understood that KS and SFG respectively represent the types of graphite and can be purchased from commercial channels.

Optionally, the mass percentage of the graphite in the base coating is 20-35%. Further optionally, the mass percentage of the graphite in the base coating is 20%, 22%, 25%, 28%, 30%, 32%, 35%, etc. If the mass percentage of graphite in the base coating is too low, ti will be challenging to achieve a good effect, and if the mass percentage of graphite in the base coating is too large, a certain adverse effect on the binding performance of the base coating may occur.

As some examples of the thickness of the base coating, the thickness of the base coating is 2-6 µm. Optionally, the thickness of the base coating is 2 µm, 3 µm, 4 µm, 5 µm, 6 µm, etc. If the base coating is too thick, the overall thickness and volume of the negative electrode plate may be increased and the thickness of the active layer may also accordingly be reduced, thereby reducing the amount of the active material, leading to reduced energy density of the battery.

In some embodiments, the mass percentage of the first binder in the base coating is 25-40%. When the mass percentage of the first binder in the base coating is within this range, the base coating can be provided with suitable binding properties, thus improving the peel strength of the negative electrode film layer. Optionally, the mass percentage of the first binder in the base coating is 25%, 28%, 30%, 32%, 35%, 38%, 40%, etc.

In some embodiments, the glass transition temperature of the first binder is 10-50 degrees Celsius (°C). If the glass transition temperature of the first binder is too low, the electrode may stick to a roller during subsequent processing, which results in an adverse effect on the subsequent processing of the electrode plate. If the glass transition temperature of the first binder is too high, the electrode plate may become relatively highly brittle and relatively poorly flexible, causing problems such as powder falling and film detachment during subsequent processing, which may also result in an adverse effect on the subsequent processing of the electrode plate. When the glass transition temperature of the first binder is 10-50°C, the first binder can have a certain viscoelasticity, thereby reducing the risk of cracking of the electrode plate due to stress concentration when the silicon-based material expands, thus further improving the cycling performance of the battery. Optionally, the glass transition temperature of the first binder is 10°C, 15°C, 20°C, 25°C, 30°C, 35°C, 40°C, 45°C, 50°C, etc.

It can be understood that the first binder can be selected from binders commonly used for electrode plates. Optionally, the first binder comprises at least one of styrene butadiene and derivatives thereof, styrene acrylic and derivatives thereof, polyurethane and derivatives thereof, polyvinylidene fluoride and derivatives thereof, and acrylate and derivatives thereof.

In some embodiments, in the base coating, the mass percentage of the conductive agent in the base coating is 30-50%. Optionally, the mass percentage of the conductive agent in the base coating is 30%, 32%, 35%, 38%, 40%, 42%, 45%, 48%, 50%, etc. Further optionally, the conductive agent comprises at least one of superconducting carbon, acetylene black, carbon black, Ketjen black, carbon dots, carbon nanotubes, graphene, and carbon nanofibers.

It can be understood that the base coating further comprises a dispersant, and the use of the dispersant can improve the dispersion uniformity of various materials in the base coating.

In some embodiments, the mass percentage of the silicon-based material in the active material of the negative electrode active layer is ≥ 50%. Optionally, the mass percentage of the silicon-based material in the active material of the negative electrode active layer is 50-100%. Further optionally, the mass percentage of the silicon-based material in the active material of the negative electrode active layer is ≥ 55%, or the mass percentage of the silicon-based material in the active material of the negative electrode active layer is ≥ 60%, or the mass percentage of the silicon-based material in the active material of the negative electrode active layer is ≥ 65%, or the mass percentage of the silicon-based material in the active material of the negative electrode active layer is ≥ 70%, or the mass percentage of the silicon-based material in the active material of the negative electrode active layer is ≥ 75%, or the mass percentage of the silicon-based material in the active material of the negative electrode active layer is ≥ 80%, or the mass percentage of the silicon-based material in the active material of the negative electrode active layer is ≥ 85%, or the mass percentage of the silicon-based material in the active material of the negative electrode active layer is ≥ 90%, or the mass percentage of the silicon-based material in the active material of the negative electrode active layer is ≥ 95%.

In some embodiments, the silicon-based material comprises at least one of elemental silicon, a silicon-oxygen material, and a silicon-carbon material.

Optionally, when the silicon-based material comprises a silicon-oxygen material, since the silicon-oxygen material has a higher expansion rate, the expansion of the silicon-oxygen material can be buffered by means of a thicker base coating, thereby further reducing the risk of wrinkling and detachment of the negative electrode plate. For example, when the silicon-based material comprises a silicon-oxygen material, the thickness of the base coating is 3-6 µm, and the mass percentage of the first binder in the base coating is 25-40%.

Optionally, when the silicon-based material comprises a silicon-carbon material, since the silicon-carbon material has a higher hardness and has correspondingly more difficulty in calendering, the flexibility of the base coating can be improved by using a larger mass percentage of the first binder. For example, when the silicon-based material comprises a silicon-carbon material, the mass percentage of the first binder in the base coating is 30-40%, and the thickness of the base coating is 2-6 µm.

It can be understood that the negative electrode active layer further comprises a second binder. Optionally, the Dv50 of the second binder is 100-600 nanometers (nm). When the negative electrode active layer comprises a silicon-based material, the pore size inside the particles of the silicon-based material will be larger after expansion. Using a second binder with a larger particle size, such as a second binder with a Dv50 of 100-600 nm, can make the binder more distributed between the particles of the silicon-based material and can better bond the particles of the silicon-based material. Optionally, the Dv50 of the second binder is 100 nm, 200 nm, 300 nm, 400 nm, 500 nm, 600 nm, etc.

Optionally, when the silicon-based material comprises a silicon-oxygen material, the Dv50 of the second binder is 100-600 nm. When the silicon-based material compries a silicon-carbon material, the Dv50 of the second binder is 300-600 nm.

In some embodiments, the glass transition temperature of the second binder is 10-50°C. If the glass transition temperature of the second binder is too low, the electrode may stick to a roller during subsequent processing, which results in an adverse effect on the subsequent processing of the electrode plate. If the glass transition temperature of the second binder is too high, the electrode plate may become relatively highly brittle and relatively poorly flexible, causing problems such as powder falling and film detachment during subsequent processing, which may also result in an adverse effect on the subsequent processing of the electrode plate. When the glass transition temperature of the second binder is 10-50°C, the second binder can have a certain viscoelasticity, thereby reducing the risk of cracking of the electrode plate due to stress concentration when the silicon-based material expands, thus further improving the cycling performance of the battery. Optionally, the glass transition temperature of the second binder is 10°C, 15°C, 20°C, 25°C, 30°C, 35°C, 40°C, 45°C, 50°C, etc.

It can be understood that the second binder can be selected from binders commonly used for electrode plates. Optionally, the second binder comprises at least one of styrene butadiene and derivatives thereof, styrene acrylic and derivatives thereof, polyurethane and derivatives thereof, polyvinylidene fluoride and derivatives thereof, and acrylate and derivatives thereof.

In some embodiments, the compacted density of the negative electrode active layer is 1.1-1.8 grams/cubic centimeter (g/cm³). If the compacted density of the negative electrode active layer is too small, the energy density of the battery may be reduced. If the compacted density is too large, the negative electrode active layer may suffer from particle pulverization, thus deteriorating the cycling performance. Optionally, the compacted density of the negative electrode active layer is 1.1 g/cm³, 1.2 g/cm³, 1.3 g/cm³, 1.4 g/cm³, 1.5 g/cm³, 1.6 g/cm³, 1.7 g/cm³, 1.8 g/cm³, etc. Further optionally, the compacted density of the negative electrode active layer is 1.15-1.65 g/cm³.

In some embodiments, since the silicon-carbon material has a higher hardness, pulverization more easily occurs during plate pressing. Therefore, when the silicon-based material comprises a silicon-carbon material, a smaller compacted density can be used. For example, when the silicon-based material comprises a silicon-carbon material, the compacted density of the negative electrode active layer is 1.15-1.5 g/cm³. When the silicon-based material comprises a silicon-oxygen material, the compacted density of the negative electrode active layer is 1.3-1.65 g/cm³.

It can be understood that the negative electrode active layer can further comprise at least one of a conductive agent and a dispersant. The conductive agent and dispersant can be selected from conductive agents and dispersants commonly used for electrode plates.

It can be understood that the active material of the negative electrode active layer can comprise a silicon-based material. Optionally, the active material of the negative electrode active layer can comprise a silicon-based material and a carbon-based material. Further optionally, the carbon-based material comprises at least one of graphite, soft carbon, and hard carbon. Still further optionally, the active substance of the negative electrode active layer comprises graphite and a silicon-based material.

In some embodiments, the negative electrode active layer comprises an active material, a conductive agent, a dispersant, and a second binder. Optionally, the mass ratio of the active material to the conductive agent to the dispersant to the second binder is (80-95):(4-10):(4-10):(4-10).

In a further embodiment, the present application provides a battery. The battery comprises a negative electrode plate.

In a further embodiment, the present application provides an electrical apparatus. The electrical apparatus comprises the above battery.

The secondary battery and the electrical apparatus of the present application are described below with reference to the accompanying drawings properly.

Generally, the secondary battery comprises a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

The positive electrode plate comprises a positive electrode current collector and a positive electrode film layer arranged on at least one surface of the positive electrode current collector, and the positive electrode film layer comprises a positive electrode active material.

By way of example, the positive electrode current collector has two surfaces opposite to each other in a thickness direction of the positive electrode current collector, and the positive electrode active material layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can comprise a polymer material substrate layer and a metal layer formed on at least one surface of the polymer material substrate layer. The composite current collector can be formed by forming a metal material on the polymer material substrate. Optionally, the metal material can include, but is not limited to, one or more of aluminum, an aluminum alloy, nickel, a nickel alloy, titanium, a titanium alloy, silver, and a silver alloy. Optionally, the polymer material substrate can include, but is not limited to, one or more of polypropylene (PP), polyethylene terephthalate (PET), polybutylene terephthalate (PBT), polystyrene (PS), and polyethylene (PE).

By way of example, the positive electrode active material can include a positive electrode active material well-known in the art for batteries. By way of example, the positive electrode active material can comprise at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. Only a single one of or a combination of two or more of these positive electrode active materials can be used. Examples of the lithium transition metal oxide can include, but are not limited to, at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, modified compounds thereof, etc. Optionally, the lithium-cobalt oxide includes LiCoO₂; the lithium-nickel oxide includes LiNiO₂; the lithium-manganese oxide includes at least one of LiMnO₂ and LiMn₂O₄; the lithium-nickel-cobalt-manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁); and the lithium-nickel-cobalt-aluminum oxide includes LiNi_{0.85}Co_{0.15}Al_{0.05}O₂. Examples of the lithium-containing phosphate with an olivine structure can include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. Optionally, the lithium iron phosphate includes LiFePO₄ (LFP); and the lithium manganese phosphate includes LiMnPO₄. The weight percentage of the positive electrode active material in the positive electrode film layer is 80-100 weight% (wt%), based on the total weight of the positive electrode film layer.

In some embodiments, the positive electrode film layer further comprises optionally a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20 weight%, based on the total weight of the positive electrode film layer.

In some embodiments, the positive electrode film layer further comprises optionally a conductive agent. By way of example, the conductive agent can include at least one of superconducting carbon, acetylene black, carbon black, Ketjen black, carbon dots, carbon nanotubes, graphene, and carbon nanofibers. The weight percentage of the conductive agent in the positive electrode film layer is 0-20 weight%, based on the total weight of the positive electrode film layer.

In some embodiments, the positive electrode plate can be prepared by dispersing the above components for preparing the positive electrode plate, for example, the positive electrode active material, the conductive agent, the binder, and any other components, in a solvent to form a positive electrode slurry. Optionally, the solvent includes N-methylpyrrolidone. The positive electrode slurry has a solid content of 40-80 wt% and a viscosity adjusted to 5000-25000 millipascal·second (mPa·s) at room temperature. The positive electrode slurry is applied to a surface of the positive electrode current collector, dried, and then cold-pressed by a cold rolling mill to form the positive electrode plate. The unit area density of the positive electrode powder coating is 25-40 milligrams/square centimeter (mg/cm²), and the compacted density of the positive electrode plate is 3.0-3.6 g/cm³, optionally 3.3-3.6 g/cm³. The calculation formula of the compacted density is: the compacted density = the coating area density / (the thickness of the electrode plate after pressing - the thickness of the current collector).

### Negative electrode plate

The negative electrode plate comprises a negative electrode current collector and a negative electrode film layer arranged on at least one surface of the negative electrode current collector, and the negative electrode film layer comprises a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material on the polymer material substrate. Optionally, the metal material includes at least one of copper, a copper alloy, nickel, a nickel alloy, titanium, a titanium alloy, silver, and a silver alloy; and the polymer material includes at least one of polypropylene (PP), polyethylene terephthalate (PET), polybutylene terephthalate (PBT), polystyrene (PS), and polyethylene (PE).

In some embodiments, the negative electrode active material can be a negative electrode active material well known in the art for batteries. By way of example, the negative electrode active material can comprise at least one of the following materials: artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. Only a single one of or a combination of two or more of these negative electrode active materials can be used. The weight percentage of the negative electrode active material in the negative electrode film layer is 70-100 weight%, based on the total weight of the negative electrode film layer.

In some embodiments, the negative electrode film layer further comprises optionally a binder. The binder can be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight percentage of the binder in the negative electrode film layer is 0-30 weight%, based on the total weight of the negative electrode film layer.

In some embodiments, the negative electrode film layer further comprises optionally a conductive agent. The conductive agent can be selected from at least one of superconducting carbon, acetylene black, carbon black, Ketjen black, carbon dots, carbon nanotubes, graphene, and carbon nanofibers. The weight percentage of the conductive agent in the negative electrode film layer is 0-20 weight%, based on the total weight of the negative electrode film layer.

In some embodiments, the negative electrode film layer further comprises optionally other auxiliaries, for example, a thickener. The weight percentage of the other auxiliaries in the negative electrode film layer is 0-15 weight%, based on the total weight of the negative electrode film layer. Optionally, the thickener includes sodium carboxymethylcellulose (CMC-Na).

In some embodiments, the negative electrode plate can be prepared by dispersing the above components for preparing the negative electrode plate, for example, the negative electrode active material, the conductive agent, the binder, and any other components, in a solvent to form a negative electrode slurry. Optionally, the solvent includes deionized water. The negative electrode slurry has a solid content of 30-70 wt% and a viscosity adjusted to 2000-10000 mPa·s at room temperature. The obtained negative electrode slurry is applied to a surface of the negative electrode current collector, subjected to a drying procedure, and then cold-pressed, for example, by a roll press to form the negative electrode plate. The unit area density of the negative electrode powder coating is 6-10 mg/cm², and the compacted density of the negative electrode plate is 1.1-1.8 g/cm³.

### Electrolyte

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, the electrolyte is an electrolyte solution. The electrolyte solution comprises an electrolyte salt and a solvent.

In some embodiments, the electrolyte salt can be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP). The concentration of the electrolyte salt is generally 0.5-5 moles/liter (mol/L).

In some embodiments, the solvent can be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and diethyl sulfone (ESE).

In some embodiments, the electrolyte solution further comprises optionally an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### Separator

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

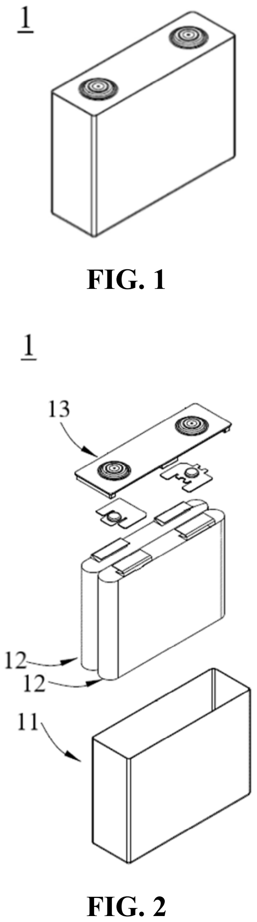

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc. The shape of the secondary battery is not particularly limited in the present application, and the secondary battery can be cylindrical, prismatic, or in any other shape. For example, FIG. 1 is a secondary battery 1 with a prismatic structure as an example.

In some embodiments, referring to FIG. 2, the outer package can comprise a case 11 and a top cover assembly 13. The case 11 can comprise a bottom plate and a side plate connected to the bottom plate, and the bottom plate and the side plate enclose to form an accommodating cavity. The case 11 has an opening in communication with the accommodating cavity, and the top cover assembly 13 can cover the opening to close the accommodating cavity. The positive electrode plate, the negative electrode plate, and the separator can be made into an electrode assembly 12 by a winding process or a lamination process. The electrode assembly 12 is encapsulated into the accommodating cavity. An electrolyte solution infiltrates into the electrode assembly 12. The number of electrode assemblies 12 contained in the secondary battery 1 can be one or more and can be selected by those skilled in the art according to specific actual requirements.

In addition, the present application further provides an electrical apparatus. The electrical apparatus comprises the secondary battery provided by the present application. The secondary battery can be used as a power source for the electrical apparatus and can also be used as an energy storage unit for the electrical apparatus. The electrical apparatus can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery can be selected according to the requirements during use.

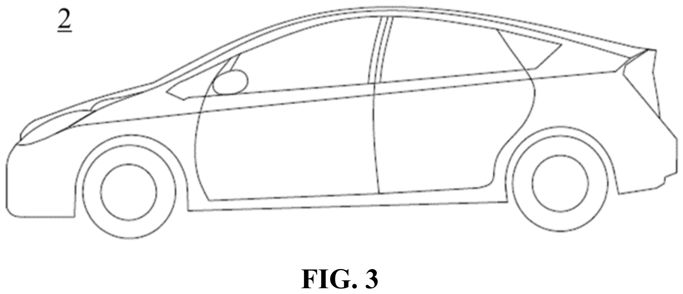

FIG. 3 is an electrical apparatus 2 as an example. The electrical apparatus is an all-electric vehicle, a hybrid electric vehicle, a plug-in hybrid electric vehicle, etc. To satisfy the need of the electrical apparatus for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

To make the technical problems to be solved by the present application, the technical solutions, and the beneficial effects clearer, the present application is further described below in detail with reference to embodiments and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

In embodiments in which no specific technologies or conditions are specified, technologies or conditions described in the literature in the art or product specifications are followed. The reagents or instruments used without manufacturer indicated are all commercially available conventional products.

### Example 1

In this example, a negative electrode film layer was prepared on a negative electrode current collector by coating. The negative electrode film layer comprised a base coating and a negative electrode active layer. The base coating was located between the negative electrode current collector and the negative electrode active layer. The material of the negative electrode current collector was an iron-nickel alloy foil. The base coating comprised super P conductive agent, sodium carboxymethylcellulose as a dispersant, and modified styrene butadiene rubber as a binder (in a mass ratio of 50:10:40). The negative electrode active layer comprised graphite, a silicon-carbon material, sodium carboxymethylcellulose as a dispersant, and modified styrene butadiene rubber as a binder (in a mass ratio of 46.5:46.5:2:5), and the compacted density of the negative electrode active layer was 1.6 g/cm³. The tensile strength and Young's modulus of the negative electrode current collector, the thickness of the base coating, the mass percentage of the binder in the base coating, the peel strength of the negative electrode film layer, the Dv50 of the conductive agent in the negative electrode active layer, etc. were as shown in Table 1.

### Examples 2 and 3

Examples 2 and 3 were different from Example 1 in that the silicon-based material in Example 2 was a silicon-oxygen material, and the silicon-based material in Example 3 was elemental nano-silicon particles.

### Examples 4-6

Examples 4-6 were different from Example 1 in that the tensile strength and Young's modulus of the negative electrode current collector, the thickness of the base coating, the mass percentage of the binder in the base coating, the peel strength of the negative electrode film layer, etc. were different, as shown in Table 1.

### Example 7

Example 7 was different from Example 1 in that the base coating further comprised KS-6 lamellar graphite.

### Examples 8 and 9

Examples 8 and 9 were different from Example 1 in that the Dv50 of the binder in the negative electrode active layer was as shown in Table 1.

### Comparative Example 1

Comparative Example 1 was different from Example 1 in that the negative electrode plate did not comprise a base coating.

### Comparative Example 2

Comparative Example 2 was different from Example 1 in that the negative electrode plate did not comprise a base coating, the negative electrode current collector was a copper foil, and the tensile strength was as shown in Table 1.

### Comparative Example 3

Comparative Example 3 was different from Example 1 in that the negative electrode current collector was a copper foil, and the tensile strength was as shown in Table 1.

**Table 1**

| | Negative electrode current collector | | base coating | | | Dv50 (nm) of binder in negative electrode active layer | Peel strength (N/m) of negative electrode film layer | Whether fully charged electrode plate was wrinkled? | Whether fully charged electrode plate was detached? | Cycling performance of battery (number of cycles) |
|---|---|---|---|---|---|---|---|---|---|---|
| | Tensile strength (MPa) | Young's modulus (GPa) | Thickness (µm) | Mass percentage (%) of first binder | Mass percentage (%) of graphite | | | | | |
| Example 1 | 800 | 75 | 6 | 40 | 0 | 500 | 35 | No | No | 753 |
| Example 2 | 800 | 75 | 6 | 40 | 0 | 500 | 38 | No | No | 605 |
| Example 3 | 800 | 75 | 6 | 40 | 0 | 500 | 35 | No | No | 402 |
| Example 4 | 1000 | 90 | 6 | 40 | 0 | 500 | 35 | No | No | 828 |
| Example 5 | 900 | 85 | 4 | 30 | 0 | 500 | 32 | No | No | 776 |
| Example 6 | 800 | 80 | 2 | 25 | 0 | 500 | 30 | No | No | 684 |
| Example 7 | 800 | 75 | 6 | 40 | 30 | 500 | 35 | No | No | 782 |
| Example 8 | 800 | 75 | 6 | 40 | 0 | 80 | 28 | No | No | 691 |
| Example 9 | 800 | 75 | 6 | 40 | 0 | 650 | 35 | No | No | 733 |
| Comparative Example 1 | 800 | 75 | / | / | / | 500 | 15 | No | Yes | 387 |
| Comparative Example 2 | 350 | 50 | / | / | / | 500 | 18 | Yes | Yes | 362 |
| Comparative Example 3 | 350 | 50 | 6 | 40 | 0 | 500 | 35 | Yes | No | 553 |

### Test Example

(1) The negative electrode plates of the examples and comparative examples were respectively tested for the peel strength of the negative electrode film layer. The test method involved attaching a 20 mm wide standard adhesive tape (31B) to one surface of the negative electrode film layer using a rolling machine with a fixed stress (2 kg, 300 mm/min), performing a 180 degree peel test using a tensile testing machine at a speed of 300 mm/min, obtaining the peel force values of 50 points at a test distance of 50 mm to 120 mm, and calculating the average value. The test results were as shown in Table 1.
(2) The negative electrode plates of the examples and comparative examples were respectively tested for whether the electrode plate was wrinkled when fully charged. The test method involved charging a cell to a cut-off voltage of 4.25 V at a rate of 0.33 C, switching the charging to potentiostatic charging, and stopping charging when the current dropped to a rate current of 0.05 C to obtain a fully charged cell; subsequently, disassembling the fully charged cell to obtain a fully charged negative electrode plate, so that whether the plate was wrinkled can be observed. The test results were as shown in Table 1.
(3) The negative electrode plates of the examples and comparative examples were respectively tested for whether the fully charged electrode plate was detached. The test method involved charging a cell to a cut-off voltage of 4.25 V at a rate of 0.33 C, switching the charging to potentiostatic charging, and stopping charging when the current dropped to a rate current of 0.05 C to obtain a fully charged cell; subsequently, disassembling the fully charged cell to obtain a fully charged negative electrode plate, so that whether the active substance film layer on the electrode plate was detached from the surface of the current collector could be observed. The test results were as shown in Table 1.
(4) Battery cycling performance test

The negative electrode plates of the examples and comparative examples were assembled into batteries with a positive electrode plate, a separator, an electrolyte solution, etc.

Preparation of positive electrode plate: lithium-nickel-cobalt-manganese oxide NCM811 as a positive electrode active material, acetylene black as a conductive agent, and polyvinylidene fluoride (PVDF) as a binder were mixed in a mass ratio of 94:3:3, and the solvent N-methylpyrrolidone (NMP) was added. The mixture was stirred under the action of a vacuum stirrer until the system became uniform to obtain a positive electrode slurry; and the positive electrode slurry was evenly applied to the two surfaces of an aluminum foil with a thickness of 13 µm as a positive electrode current collector, respectively, dried at 115°C for 15 minutes (min), and cold pressed to obtain a positive electrode plate. The single-side density of the positive electrode active layer was 30 mg/cm², and the compacted density was 3.3 g/cm³.

Preparation of electrolyte solution: A mixture of ethylene carbonate (EC), ethyl methyl carbonate (EMC), and diethyl carbonate (DEC) was used as an organic solvent. The volume ratio of EC to EMC to DEC was 20:20:60. In an argon-atmosphere glove box with a water content of < 10 ppm, fully dried LiPF₆ was dissolved in the organic solvent and uniformly stirred to obtain an electrolyte solution, in which the concentration of LiPF₆ was 1 mol/L.

Separator: A polyethylene microporous thin film was used as a porous separator substrate, and inorganic aluminum trioxide powder, polyvinylpyrrolidone, and acetone as a solvent were uniformly mixed in a weight ratio of 3:1.5:5.5 to prepare a slurry, and the slurry was applied to one surface of the substrate and dried to obtain a separator.

The batteries were subjected to a cycling performance test The test method involved galvanostatically charging the battery to 4.25 V at a rate current of 0.33 C at 25°C, then switching the charging to potentiostatic charging, stopping charging when the current dropped to a rate current of 0.05 C, and then galvanostatically discharging the battery to 2.5 V at a rate current of 0.33 C, and then stop discharging. At this time, the number of cycles was 1.

The above charging and discharging cycling was repeated until the capacity of the battery dropped to 80% of the initial capacity, and at this time the test was stopped. The cycle number m of the lithium-ion battery at this time was recorded. The test results were as shown in Table 1.

It can be seen from Table 1 that when the negative electrode plate comprised a silicon-based material, a base coating, and a current collector with a relatively great tensile strength, the wrinkling and detachment problems of the negative electrode plate were well improved, and the cycling performance of the battery was relatively high.

Furthermore, when the base coating comprised lamellar graphite and/or the Dv50 of the binder in the active layer was appropriate, the battery exhibited a better cycling performance.

The technical features in the foregoing embodiments can be randomly combined. For the sake of brevity of description, not all possible combinations of the technical features in the above embodiments are described. However, as long as combinations of these technical features do not conflict with each other, these combinations are all considered as falling within the scope described in this specification.

The foregoing embodiments only describe several implementations of the present application, which are described relatively specifically and in detail, and thus, cannot be construed as a limitation to the scope of patent of the present invention. It should be noted that for those of ordinary skill in the art, a plurality of transformations and improvements can also be made without departing from the idea of the present application. These transformations and improvements all fall within the scope of protection of the present application. Therefore, the scope of protection of the patent of the present application shall be subject to the appended claims.

## Claims

1. A negative electrode plate, comprising a negative electrode current collector and a negative electrode film layer located on the negative electrode current collector, wherein the negative electrode film layer comprises a base coating and a negative electrode active layer; the base coating is located between the negative electrode current collector and the negative electrode active layer; the base coating comprises a conductive agent and a first binder; an active material of the negative electrode active layer comprises a silicon-based material; the tensile strength of the negative electrode current collector is ≥ 800 MPa; and the peel strength of the negative electrode film layer is ≥ 28 N/m.

2. The negative electrode plate according to claim 1, wherein the Young's modulus of the negative electrode current collector is ≥ 80 GPa.

3. The negative electrode plate according to claim 1 or 2, wherein the base coating further comprises graphite;
optionally, the graphite includes lamellar graphite; and
optionally, the mass percentage of the graphite in the base coating is 20-35%.

4. The negative electrode plate according to any one of claims 1 to 3, wherein the thickness of the base coating is 2-6 µm.

5. The negative electrode plate according to any one of claims 1 to 4, wherein the first binder satisfies at least one of the following features (1) and (2):
(1) the mass percentage of the first binder in the base coating is 25-40%; and
(2) the glass transition temperature of the first binder is 10-50°C.

6. The negative electrode plate according to any one of claims 1 to 5, wherein the conductive agent satisfies at least one of the following features (1) and (2):
(1) the mass percentage of the conductive agent in the base coating is 30-50%; and
(2) the conductive agent comprises at least one of superconducting carbon, acetylene black, carbon black, Ketjen black, carbon dots, carbon nanotubes, graphene, and carbon nanofibers.

7. The negative electrode plate according to any one of claims 1 to 6, wherein the silicon-based material satisfies at least one of the following features (1) and (2):
(1) the mass percentage of the silicon-based material in the active material of the negative electrode active layer is ≥ 50%; and
(2) the silicon-based material comprises at least one of a silicon-oxygen material and a silicon-carbon material.

8. The negative electrode plate according to any one of claims 1 to 7, wherein the negative electrode active layer further comprises a second binder;
optionally, the Dv50 of the second binder is 100-600 nm; and
optionally, the glass transition temperature of the second binder is 10-50°C.

9. The negative electrode plate according to any one of claims 1 to 8, wherein the compacted density of the negative electrode active layer is 1.1-1.8 g/cm³; and
optionally, the compacted density of the negative electrode active layer is 1.15-1.65 g/cm³.

10. The negative electrode plate according to any one of claims 1 to 9, wherein the negative electrode current collector satisfies at least one of the following features (1)-(3):
(1) the material of the negative electrode current collector comprises at least one of a copper alloy, stainless steel, and an iron-nickel alloy;
(2) the thickness of the negative electrode current collector is 4-20 µm;
optionally, the thickness of the negative electrode current collector is 5-10 µm; and
(3) the elongation at break of the negative electrode current collector is ≤ 4%.

11. A battery, comprising the negative electrode plate according to any one of claims 1 to 10.

12. An electrical apparatus, comprising the battery according to claim 11.
